(19) Europäisches Patentamt
European Patent Office
Office européen des brevets

(11) Veröffentlichungsnummer: **0 428 484 A2**

(12) **EUROPÄISCHE PATENTANMELDUNG**

(21) Anmeldenummer: **90810852.5**

(51) Int. Cl.⁵: **C08G 75/23**, C08G 65/40

(22) Anmeldetag: **06.11.90**

(30) Priorität: **14.11.89 CH 4088/89**

(43) Veröffentlichungstag der Anmeldung: **22.05.91 Patentblatt 91/21**

(84) Benannte Vertragsstaaten: **DE ES FR GB IT NL SE**

(71) Anmelder: **CIBA-GEIGY AG**
**Klybeckstrasse 141**
**CH-4002 Basel(CH)**

(72) Erfinder: **Pfaendner, Rudolf, Dr.**
**Sackgasse 3**
**W-6149 Rimbach/Odenwald 1(DE)**
Erfinder: **Stockinger, Friedrich**
**Au Fernotz**
**CH-1784 Courtepin(CH)**

(54) **Geordnete Polyetherketonsulfone.**

(57) Geordnete Polyetherketonsulfone, die, bezogen auf die Gesamtmenge der im Polymer vorhandenen Strukturelemente, 40-100 Mol% eines wiederkehrenden Strukturelements der Formel I

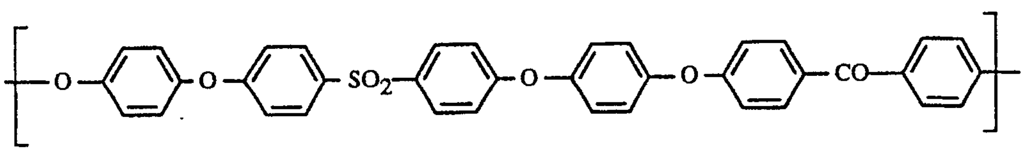

(I)

und 0-60 Mol% eines wiederkehrenden Strukturelements der Formel II

$\{OAr_1\text{-}O\text{-}Ar_2\}$ (II)

enthalten, worin $Ar_1$ z.B. einen 4,4'-Benzophenonrest und $Ar_2$ z.B. einen 1,4-Phenylenrest bedeuten, eignen sich beispielsweise für die Herstellung von Formkörpern mit guten mechanischen und thermischen Eigenschaften.

EP 0 428 484 A2

# GEORDNETE POLYETHERKETONSULFONE

Die Erfindung betrifft bestimmte geordnete Polyetherketonsulfone, ein Verfahren zu deren Herstellung und deren Verwendung.

Polyarylenetherketone sind teilkristalline technische Werkstoffe mit guten mechanischen Eigenschaften und einer sehr hohen Lösungsmittelbeständigkeit gegenüber nahezu allen organischen Lösungsmitteln. Polyarylenethersulfone sind weniger beständig gegenüber organischen Lösungsmitteln, besitzen jedoch höhere Glasübergangstemperaturen als entsprechende Ketone. Mit Polymeren, die beide Gruppierungen beinhalten, erhält man eine Eigenschaftskombination, d.h. Polymere mit gegenüber den Polyarylenetherketonen etwas verringerten Lösungsmittelstabilität, aber verbesserten thermischen Eigenschaften.

Solche bekannten Polyetherketonsulfone werden z.B. von C.K. Sham et al., in British Polymer Journal 20, 149-155(1988) beschrieben. Sie werden durch Umsetzung eines Diphenols mit einem Gemisch aus zwei Dihalogenderivaten, z.B. aus 4,4'-Dichlordiphenylsulfon und 4,4'-Difluorbenzophenon, in Gegenwart basischer Katalysatoren hergestellt. Bei den auf diese Art hergestellten Polymeren sind die Keton- und Sulfongruppen entlang der Polymerkette statistisch verteilt. S.D. Wu et al. beschreiben in Polymer Prepr. (A.C.S.), 26(2), 277-280(1985) neben statistischen Polyetherketonsulfonen auch segmentierte Copolymere, welche aus hydroxylterminierten Polysulfon-Oligomeren und 4,4'-Difluorbenzophenon in Gegenwart von Basen hergestellt werden. Eine Verarbeitung dieser Polymeren ist erst oberhalb der Schmelztemperatur, d.h. bei weit über 300 °C möglich.

Ziel der vorliegenden Erfindung war es, Polyetherketonsulfone bereitzustellen, welche sich als technische Werkstoffe eignen und welche gegenüber bekannten Polyetherketonsulfonen verbesserte Eigenschaften aufweisen. Dies kann überraschenderweise dadurch erreicht werden, dass bestimmte geordnete Polyetherketonsulfone synthetisiert werden.

Gegenstand der Erfindung sind geordnete Polyetherketonsulfone, die, bezogen auf die Gesamtmenge der im Polymer vorhandenen Strukturelemente, 40-100, vorzugsweise 50-100 Mol%, eines wiederkehrenden Strukturelements der Formel I

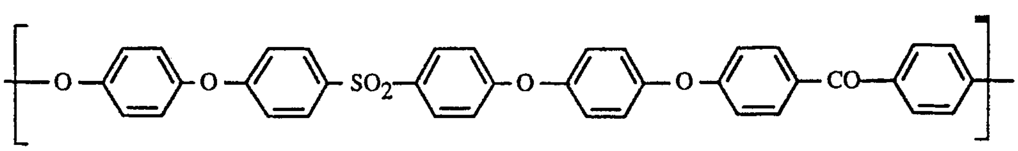 (I)

und 0-60, vorzugsweise 0-50, Mol% eines wiederkehrenden Strukturelements der Formel II

$\{OA_1\text{-}O\text{-}Ar_2\}$ (II)

enthalten, worin $Ar_1$ eine Gruppe der Formeln IIIa oder IIIb darstellt

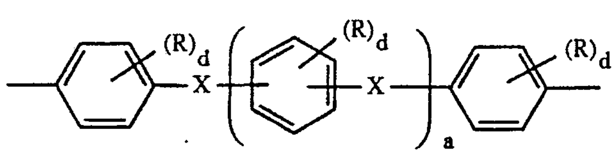 (IIIa),

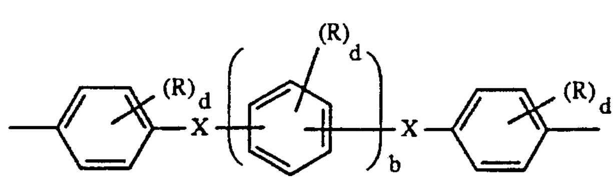 (IIIb),

und $Ar_2$ eine Gruppe der Formeln IVa-IVd bedeutet

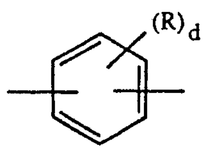 (IVa), 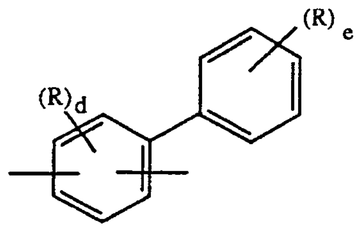 (IVb),

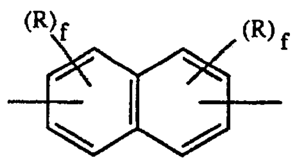 (IVc) oder 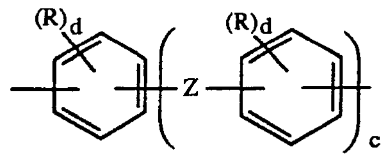 (IVd),

wobei X für -CO-, $-SO_2-$ oder -SO- und Z für eine direkte Bindung, $-CH_2-$, $-C(CH_3)_2-$,$-C(CF_3)_2-$, -CO-, $-SO_2-$, -SO-, -S- oder -O- stehen, R eine $C_1$-$C_4$-Alkylgruppe bedeutet, a die Zahlen 0, 1 oder 2, b die Zahlen 2 oder 3 und c die Zahlen 1, 2 oder 3 darstellen und d für eine ganze Zahl von 0 bis 4, e für eine ganze Zahl von 0 bis 5 und f für eine ganze Zahl von 0 bis 3 stehen.

Die erfindungsgemässen Polymere sind durch das Strukturelement der Formel I charak terisiert, in welchem die Keton- und Sulfongruppen entlang der Polymerkette überwiegend in geordneter Weise, d.h. abwechselnd verteilt sind. Sie zeichnen sich gegenüber vergleichbaren, statistischen Polymeren durch verbesserte mechanische und gegenüber segmentierten Copolymeren durch verbesserte thermische Eigenschaften (höhere Glasübergangstemperatur) und durch eine vorteilhaftere Verarbeitung (niedrigere Verarbeitungstemperatur) aus. Die erfindungsgemässen geordneten Copolymere sind gemäss DSC-Untersuchungen im wesentlichen amorphe Verbindungen. Die Eigenschaften eines Polymeren gehen im allgemeinen auf die Struktur, d.h. die verwendeten Bindungen und Einheiten zurück. Bei den vorliegenden erfindungsgemässen geordneten Polymeren liegen die gleiche Art und Anzahl von Strukturen zugrunde wie im statistischen Fall. Es ist daher überraschend, dass die erfindungsgemässen Polymeren bessere Eigenschaften aufweisen.

Das Strukturelement der Formel I kann z.B. durch Polykondensation aus 4,4'-Bis(4"-hydroxyphenoxy)-diphenylsulfon und 4,4'-Dihalogenbenzophenon oder aus 4,4'-Bis(4"-hydroxyphenoxy)benzophenon und 4,4'-Dihalogendiphenylsulfon hergestellt werden. Die Ausgangsverbindungen, 4,4'-Dihalogenbenzophenonund 4,4'-Dihalogendiphenylsulfon sind im Handel erhältlich. 4,4'-Bis-(4"hydroxyphenoxy)diphenylsulfon kann z.B. aus 4,4'-Dichlordiphenylsulfon und Hydrochinonmonomethylether, wie von P.M. Lindley et al. in A.C.S. Symp. Ser. 282, 31-42(1985) beschrieben, hergestellt werden. 4,4'-Bis(4"-hydroxyphenoxy)benzophenon kann beispielsweise aus p.-tert.-Butoxyphenol und 4,4'-Dichlorbenzophenon gemäss DE-OS 3,700,809, und nachfolgender Etherspaltung hergestellt werden.

In analoger Weise, wie die Strukturelemente der Formel I können auch die Strukturelemente der Formel II hergestellt werden.

Gegenstand vorliegender Erfindung ist auch ein Verfahren zur Herstellung der erfindungsgemässen Polyetherketonsulfone, dadurch gekennzeichnet, dass man (a1) entweder ein Dihalogenderivat der Formel V

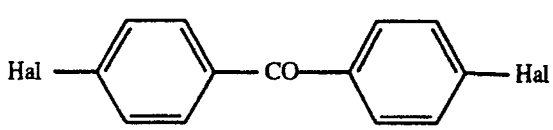 (V)

mit einem Diphenol der Formel VI

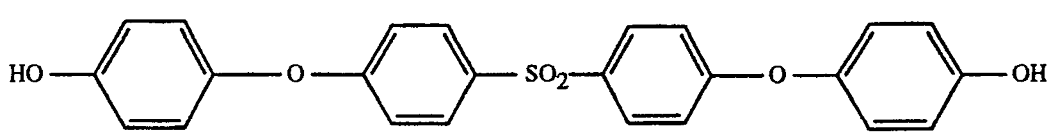 (VI)

oder ein Dihalogenderivat der Formel VII

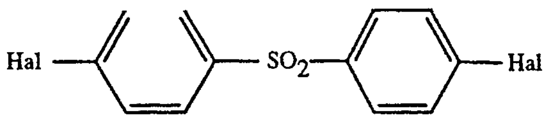

(VII)

mit einem Diphenol der Formel VIII

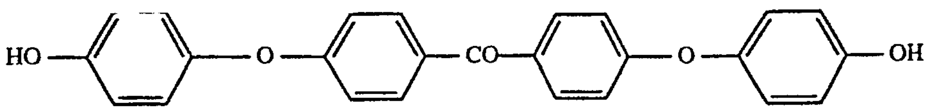

(VIII)

in Gegenwart alkalischer Katalysatoren in einem polaren aprotischen Lösungsmittel polykondensiert, gegebenenfalls
(a2) ein Dihalogenderivat der Formel IX
Hal-$Ar_1$-Hal (IX)
mit einem Diphenol der Formel X
HO-$Ar_2$-OH (X)
in Gegenwart alkalischer Katalysatoren in einem polaren aprotischen Lösungsmittel polykondensiert und anschliessend gegebenenfalls (b) die Reaktionsprodukte der Umsetzung (a1) mit den Reaktionsprodukten der Umsetzung (a2) miteinander in Gegenwart alkalischer Katalysatoren in einem polaren aprotischen Lösungsmittel weiter polykondensiert, wobei Hal in den Formeln V, VII und IX für Halogen, insbesondere Fluor oder Chlor steht, $Ar_1$ und $Ar_2$ die oben angegebene Bedeutung haben, und wobei die relativen Mengen des Reaktionsproduktes (a1) und des Reaktionsproduktes (a2) so gewählt werden, dass das resultierende Copolymer die oben definierten Mengen der Strukturelemente der Formel I und II aufweist.

Anstelle der Diphenole der Formeln VI oder VIII und X können auch die entsprechenden Alkali- oder Erdalkaliphenolate, z.B. die Kalium- oder Calciumphenolate, eingesetzt werden.

Ueblicherweise wird die Polykondensation in etwa äquimolaren Verhältnissen der Verbindungen der Formeln V und VI oder VII und VIII bzw. IX und X durchgeführt. Unter etwa äquimolaren Mengen versteht man in diesem Zusammenhang ein Molverhältnis von 0,8:1,0 bis 1,0:0,8, vorzugsweise von 0,95:1,0 bis 1,0:0,95.

Bei der Herstellung der Copolymeren, welche sowohl Strukturelemente der Formel I als auch Strukturelemente der Formel II enthalten, kann die Herstellung sowohl in statistischer als auch in segmentierter Weise (Blockcopolymeres) erfolgen. Bei der Synthese in statistischer Form wird z.B. ein Gemisch der Phenole VIII und X mit einem oder mehreren Dihalogenderivaten der Formel IX kondensiert.

Zur Herstellung eines Blockcopolymeren werden Reaktionsprodukte der Umsetzung (a1) mit Hydroxyl oder Phenolat-Endgruppen und die Reaktionsprodukte der Umsetzung (a2) mit Halogenendgruppen oder umgekehrt synthetisiert. Dies wird bekannterweise durch Einsatz eines geeigneten Ueberschusses des Diphenols bzw. des Dihalogenderivates bei der Herstellung des Reaktionsproduktes (a1) bzw. (a2) erreicht. Ein geeigneter Ueberschuss eines der Edukte ist beispielsweise ein Ueberschuss von etwa 1 bis 50 Mol.%. Die Höhe des Ueberschusses bestimmt jeweils die Blocklänge.

Als alkalische Katalysatoren verwendet man im erfindungsgemässen Verfahren in der Regel Alkali- und Erdalkalimetallcarbonate sowie die entsprechenden Hydrogencarbonate, wie Natrium-, Kalium- oder Calciumcarbonat oder Hydrogencarbonat; doch können auch andere alkalische Reagentien, wie Natriumhydroxid, Kaliumhydroxid oder Calciumhydroxid Verwendung finden.

Polare, aprotische Lösungsmittel, die beim Verfahren zur Herstellung der erfindungsgemässen Polyarylenetherharze eingesetzt werden können, sind beispielsweise Dimethylsulfoxid, Dimethylacetamid, Diethylacetamid, Tetramethylharnstoff, N-Methylcaprolactam, N-Methylpyrrolidon und bevorzugt Diphenylsulfon.

Die Reaktion wird zweckmässig bei erhöhter Temperatur durchgeführt, vorzugsweise bis zur Rückfluss-Temperatur des Lösungsmittels, also etwa bis 350 °C.

Häufig empfiehlt sich die Mitverwendung eines Schleppmittels, wie z.B. Chlorbenzol, Xylol oder Toluol, um das bei der Umsetzung gebildete Wasser azeotrop aus dem Reaktionsgemisch entfernen zu können.

Die Verbindungen der Formeln IX und X sind bekannt. Sie sind zum Teil im Handel erhältlich oder können auf bekannte Weise hergestellt werden.

Geeignete Verbindungen der Formel IX sind beispielsweise 4,4′-Dichlor- oder 4,4′-Difluordiphenylsulfoxid oder -diphenylsulfon, oder 4,4′-Dichlor- oder 4,4′-Difluorbenzophenon, 4,4′-Dichlorisophthalophenon und 4,4′-Dichlorterephthalophenon.

Bevorzugte Verbindungen der Formel IX sind 4,4′-Dichlordiphenylsulfon und 4,4′-Difluorbenzophenon.

Geeignete Verbindungen der Formel X sind z.B. Hydrochinon, 4,4′-Dihydroxybiphenyl, 2-Phenylhydrochinon, 2,7-Dihydroxynaphthalin, Bisphenol A, Bisphenol F, 4,4′-Dihydroxybenzophenon, 4,4′-Dihydroxydiphenylether, 4,4′-Dihydroxydiphenylsulfid, 4,4-Dihydroxydiphenylsulfoxid, 4,4′-Dihydroxydiphenylsulfon oder 2,2-Bis(4′-hydroxyphenyl)-1,1,1,3,3,3-hexafluorpropan und die entsprechenden $C_1$-$C_4$-alkylsubstituierten Derivate, wie z.B. 3,3′,5,5′-Tetramethyl-4,4′-dihydroxydiphenylsulfon.

Bevorzugte Verbindungen der Formel X sind 4,4′-Dihydroxydiphenylsulfon,Hydrochinon und 4,4′-Dihydroxybiphenyl.

Vorzugsweise enthalten die erfindungsgemässen Polyetherketonsulfone 75-100 Mol% eines wiederkehrenden Strukturelements der Formel I und 0-25 Mol% eines wiederkehrenden Strukturelements der Formel II.

Besonders bevorzugte Polyetherketonsulfone enthalten 90-100 Mol% eines wiederkehrenden Strukturelements der Formel I und 0-10 Mol% eines wiederkehrenden Strukturelementes der Formel II.

Die bevorzugte Bedeutung von X in den Formeln IIIa und IIIb ist -CO- oder $-SO_2-$.

Die bevorzugte Bedeutung von Z in der Formel IVd ist eine direkte Bindung, $-C(CH_3)_2-$, -CO-, $-SO_2-$, -S- oder -O-.

Die bevorzugte Bedeutung von a in der Formel IIIa ist die Zahl 0.

Die Phenylengruppen in den Formeln IIIa, IIIb, IVa, IVb und IVd sind vorzugsweise 1,3-und insbesondere 1,4-Phenylengruppen. Die Substituenten R in den Formeln IIIa, IIIb und IVa bis IVd können geradkettig oder verzweigt sein. Beispiele für geeignete Substituenten sind Ethyl, n-Propyl, Isopropyl, n-Butyl und insbesondere Methyl.

Die bevorzugte Bedeutung von d in den Formeln IIIa, IIIb und IVa, IVb und IVd ist 2 oder 0. Die bevorzugte Bedeutung von e in der Formel IVb ist 1 oder 0. Die bevorzugte Bedeutung von f in der Formel IVc ist 3 oder 0. Am meisten bevorzugt sind die Reste der Formeln IIIa, IIIb und IVa bis IVd, worin d, e und f jeweils die Zahl 0 bedeuten.

Die erfindungsgemässen Polyetherketonsulfone weisen vorzugsweise eine reduzierte Viskosität von 0,1 bis 2,0 dl/g, insbesondere von 0,3 bis 1,5 dl/g, gemessen bei 25°C an einer 1%igen Lösung (1 g Polymeres in 100 ml N-Methylpyrrolidon) auf.

Die erfindungsgemässen Polyetherketonsulfonharze können in der für Thermoplaste üblichen Weise eingesetzt und z.B. zu Formkörpern oder Folien verarbeitet werden, oder als Matrixharze, Klebstoffe oder Ueberzugsmittel eingesetzt werden. Vor der Verarbeitung der beispielsweise als Presspulver, Schmelze oder Lösung vorliegenden Polyetherketonsulfone können übliche Zusatzstoffe, wie beispielsweise Füllstoffe, Pigmente, Stabilisatoren oder Verstärkungsmittel, wie Kohlenstoff-, Bor- oder Glasfasern, zugegeben werden. Die erfindungsgemässen Polyetherketonsulfone können auch zusammen mit anderen Thermoplasten verarbeitet werden.

Vorzugsweise eignen sich die erfindungsgemässen Polyetherketonsulfone als Matrixharze für die Herstellung von Faserverbundsystemen, wobei man als Verstärkungsfasern die üblichen bei der Verstärkung technischer Werkstoffe verwendeten Fasern einsetzen kann. Diese können organische oder anorganische Fasern, Naturfasern oder Synthesefasern, wie Aramid-Fasern sein, und als Faserbündel, als orientierte oder nicht-orientierte Fasern oder als Endlosfasern vorliegen. Beispielsweise verwendet man als Verstärkungsfasern Glas-, Asbest-, Bor-, Kohlenstoff- und Metallfasern.

Eine weitere bevorzugte Anwendungsmöglichkeit für die Polyetherketonsulfone besteht in der Modifizierung anderer Kunststoffe. Diese Kunststoffe können grundsätzlich Thermoplaste oder Duromere sein. Besondere Bedeutung erlangte die Modifizierung von hitzehärtbaren Harzen, insbesondere von Epoxidharzen oder Bismaleinimiden. Solche besonderen Bedürfnissen angepassten Polymersysteme sind beispielsweise in der US 3,530,087 beschrieben. Besondere Bedeutung erlangten derartige Systeme als Matrixharze, welche zur Herstellung von Verbundbauteilen zum Einsatz gelangen. Ueblicherweise werden etwa 5-100, vorzugsweise 10-80 Gew.teile Polyetherketonsulfone pro 100 Gew.teile zu modifizierenden Kunststoff eingesetzt.

Gegenstand vorliegender Erfindung sind somit auch Formkörper, Folien, Beschichtungen oder Klebeverbindungen enthaltend ein erfindungsgemässes Polyetherketonsulfon sowie Faserverbunde enthaltend Verstärkungsfasern und als Matrixharz ein erfindungsgemässes Polyetherketonsulfon.

Ein weiterer Gegenstand der Erfindung ist die Verwendung der vorliegenden Polyetherketonsulfone zum Modifizieren von Kunststoffen.

Besonders hervorzuheben sind die unerwartet guten mechanischen und thermischen Eigenschaften der erfindungsgemässen Polyetherketonsulfone.

Beispiel 1:

In einem Rundkolben mit Rührer und Schutzgasanschluss wird unter Stickstoff eine Mischung aus 21,72 g (0,0500 Mol) 4,4′-Bis(4″-hydroxyphenoxy)diphenylsulfon, 49,57 g Diphenylsulfon, 8,12 g (0,0588 Mol) Kaliumcarbonat und 59 g Xylol bei einer Badtemperatur von 200° C erhitzt, und ein Xylol/Wasser-Gemisch wird abdestilliert. Gegen Ende des Destillationsvorganges wird dabei kurzzeitig Vakuum (0,6 kPa) angelegt. Sodann werden 10,95 g (0,0502 Mol) 4,4′-Difluorbenzophenon zu der Reaktionsmischung gegeben, die Temperatur wird innerhalb von 25 Minuten auf 250° C erhöht und dort 1 Stunde belassen. Danach wird die Temperatur auf 275° C (30 Minuten) und anschliessend auf 320° C erhöht. Diese Temperatur wird 3 Stunden beibehalten, wobei die Reaktionsmischung in zunehmendem Masse viskos wird.

Nach Abkühlen wird das Reaktionsgemisch dem Kolben entnommen, pulverisiert, mit Essigsäure versetzt und zunächst mit Wasser und dann mit Aceton extrahiert. Das so gereinigte Polymere wird danach im Vakuumtrockenschrank bis zu einer Temperatur von 240° C getrocknet. Ein auf diese Weise hergestelltes Polyetherketonsulfon besitzt eine reduzierte Viskosität (1 % Polymeres in NMP bei 25° C) von 0,53 dl/g.

Eine Probe des erhaltenen Polymeren wird gemahlen und in einer Plattenpresse (280° C, 3 t, 5 min) zu einem transparenten Film gepresst. Der so erhaltene Film (Glasübergangstemperatur: 174° C, DSC) hat eine Zugfestigkeit von 65 N/mm$^2$ und eine Bruchdehnung von 10,0% (DIN 53455).

Beispiel 2:

Analog zum im Beispiel 1 beschriebenen Verfahren wird ein Copolymeres aus 0,0751 mol 4,4′-Bis(4-hydroxyphenoxy)diphenylsulfon, 0,0252 mol 4,4′-Dihydroxydiphenylsulfon und 0,1001 mol 4,4′-Difluorbenzophenon mit 0,1072 mol Kaliumcarbonat hergestellt (Reaktionsbedingungen 1 h/228° C, 1 h/250° C, 1 h/282° C und 2 h/305° C). Das Polymere weist eine reduzierte Viskosität (1 g in 100 ml NMP) von 0,70 dl/g und eine Glasübergangstemperatur von 174° C auf.

Beispiel 3:

Analog zum im Beispiel 1 beschriebenen Verfahren wird ein Copolymeres aus 0,0251 mol 4,4′-Bis(4-hydroxyphenoxy)diphenylsulfon, 0,0251 mol 4,4′-Dihydroxydiphenylsulfon und 0,0502 mol 4,4′-Difluorbenzophenon mit 0,0542 mol Kaliumcarbonat hergestellt (Reaktionsbedingungen 1 h/222° C, 1 h/246° C, 1 h/278° C und 3 h/305° C). Das Polymere weist eine reduzierte Viskosität (1 g in 100 ml NMP) von 0,25 dl/g und eine Glasübergangstemperatur von 158° C auf.

Beispiel 4:

Analog zum im Beispiel 1 beschriebenen Verfahren wird ein Copolymeres aus 0,0501 mol 4,4′-Bis(4-hydroxyphenoxy)diphenylsulfon, 0,0251 mol 4,4′-Dichlordiphenylsulfon und 0,0251 mol 4,4′-Difluorbenzophenon mit 0,0501 mol Kaliumcarbonat hergestellt (Reaktionsbedingungen 1 h/226° C, 1 h/253° C, 1 h/281° C und 2 h/302° C). Das Polymere weist eine reduzierte Viskosität (1 g in 100 ml NMP) von 0,51 dl/g und eine Glasübergangstemperatur von 187° C auf.

## Ansprüche

1. Geordnete Polyetherketonsulfone, die, bezogen auf die Gesamtmenge der im Polymer vorhandenen Strukturelemente, 40-100 Mol% eines wiederkehrenden Strukturelements der Formel I

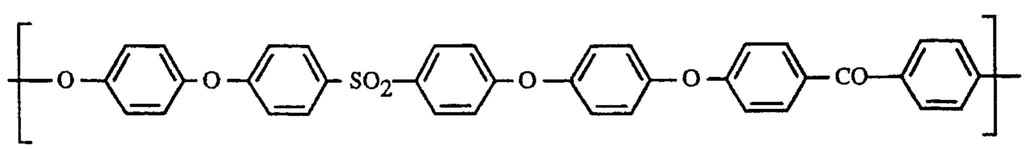

(I)

und 0-60 Mol% eines wiederkehrenden Strukturelements der Formel II

$\{OAr_1-O-Ar_2\}$ (II)

enthalten, worin $Ar_1$ eine Gruppe der Formeln IIIa oder IIIb darstellt

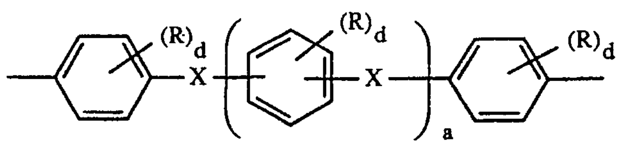

(IIIa),

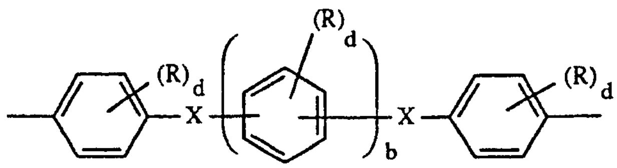

(IIIb),

und $Ar_2$ eine Gruppe der Formeln IVa-IVd bedeutet

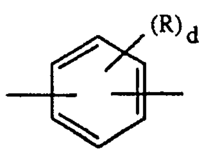

(IVa),

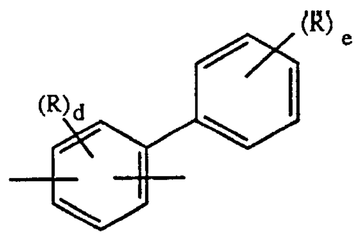

(IVb),

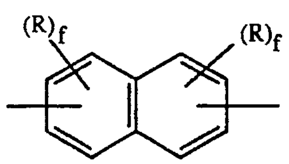

(IVc) oder

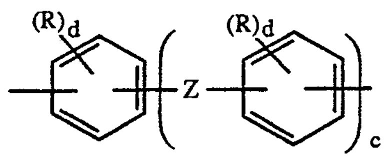

(IVd),

wobei X für -CO-, $-SO_2-$ oder -SO- und Z für eine direkte Bindung, $-CH_2-$, $-C(CH_3)_2-$,$-C(CF_3)_2-$, -CO-, $-SO_2-$, -SO-, -S- oder -O- stehen, R eine $C_1$-$C_4$-Alkylgruppe bedeutet, a die Zahlen 0, 1 oder 2, b die Zahlen 2 oder 3 und c die Zahlen 1, 2 oder 3 darstellen und d für eine ganze Zahl von 0 bis 4, e für eine ganze Zahl von 0 bis 5 und f für eine ganze Zahl von 0 bis 3 stehen.

2. Polyetherketonsulfone nach Anspruch 1, welche 75-100 Mol% eines wiederkehrenden Strukturelements der Formel I und 0-25 Mol% eines wiederkehrenden Strukturelements der Formel II enthalten.

3. Polyetherketonsulfone nach Anspruch 1 oder 2, welche 90-100 Mol% eines wiederkehrenden Strukturelements der Formel I und 0-10 Mol% eines wiederkehrenden Strukturelements der Formel II enthalten.

4. Polyetherketonsulfone nach einem der Ansprüche 1 bis 3, worin X in den Formeln IIIa und IIIb -CO- oder $-SO_2-$ bedeutet.

5. Polyetherketonsulfone nach einem der Ansprüche 1 bis 4, worin Z in der Formel IVd eine direkte Bindung, $-C(CH_3)_2-$, -CO-, $-SO_2-$, -S- oder -O- bedeutet.

6. Polyetherketonsulfone nach einem der Ansprüche 1 bis 5, worin R in den Formeln IIIa, IIIb und IVa-IVd Methyl bedeutet.

7. Polyetherketonsulfone nach einem der Ansprüche 1 bis 5, worin d, e und f in den Formeln IIIa, IIIb und IVa-IVd jeweils die Zahl 0 bedeuten.

8. Polyetherketonsulfone nach einem der Ansprüche 1 bis 7 mit einer reduzierten Viskosität von 0,1 bis 2,0 dl/g, vorzugsweise von 0,3 bis 1,5 dl/g, gemessen bei 25 °C an einer 1%igen Lösung (1 g/100 ml) in N-Methylpyrrolidon.

9. Verfahren zur Herstellung von Polyetherketonsulfonen nach Anspruch 1, dadurch gekennzeichnet, dass man (a1) entweder ein Dihalogenderivat der Formel V

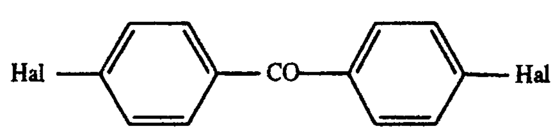

(V)

mit einem Diphenol der Formel VI

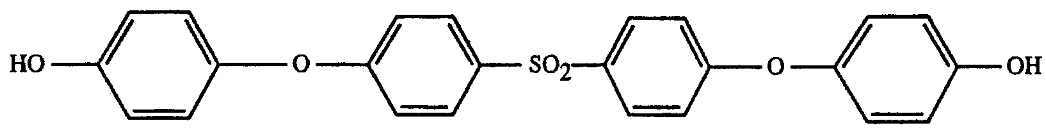

oder ein Dihalogenderivat der Formel VII

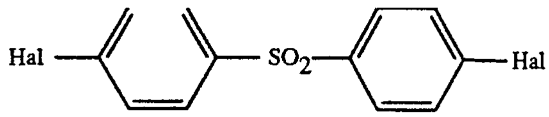

(VII)

mit einem Diphenol der Formel VIII

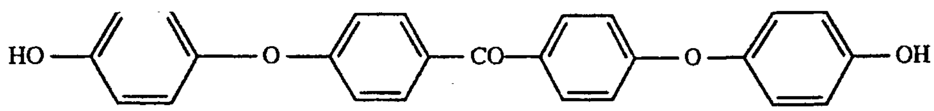

(VIII)

in Gegenwart alkalischer Katalysatoren in einem polaren aprotischen Lösungsmittel polykondensiert, gegebenenfalls
(a2) ein Dihalogenderivat der Formel IX
$Hal-Ar_1-Hal$ (IX)
mit einem Diphenol der Formel X
$HO-Ar_2-OH$ (X)
in Gegenwart alkalischer Katalysatoren in einem polaren aprotischen Lösungsmittel polykondensiert und anschliessend gegebenenfalls (b) die Reaktionsprodukte der Umsetzung (a1) mit den Reaktionsprodukten der Umsetzung (a2) miteinander in Gegenwart alkalischer Katalysatoren in einem polaren aprotischen Lösungsmittel weiter polykondensiert, wobei Hal in den Formeln V, VII und IX für Halogen, insbesondere Fluor oder Chlor steht, $Ar_1$ und $Ar_2$ die oben angegebene Bedeutung haben, und wobei die relativen Mengen des Reaktionsproduktes (a1) und des Reaktionsproduktes (a2) so gewählt werden, dass das resultierende Copolymer die in Anspruch 1 definierten Mengen der Strukturelemente der Formel I und II aufweist.

10. Verfahren nach Anspruch 9, worin anstelle der Diphenole der Formeln VI oder VIII und X die entsprechenden Alkali- oder Erdalkaliphenolate eingesetzt werden.

11. Formkörper, Folien, Beschichtungen oder Klebverbindungen enthaltend ein Polyetherketonsulfon nach Anspruch 1.

12. Faserverbund, enthaltend Verstärkungsfasern und als Matrixharz ein Polyetherketonsulfon nach Anspruch 1.

13. Verwendung der Polyetherketonsulfone nach Anspruch 1 zum Modifizieren von Kunststoffen.

Patentansprüche für folgenden Vertragsstaat: ES

1. Verfahren zur Herstellung von geordneten Polyetherketonsulfonen, die, bezogen auf die Gesamtmenge der im Polymer vorhandenen Strukturelemente, 40-100 Mol% eines wiederkehrenden Strukturelements der Formel I

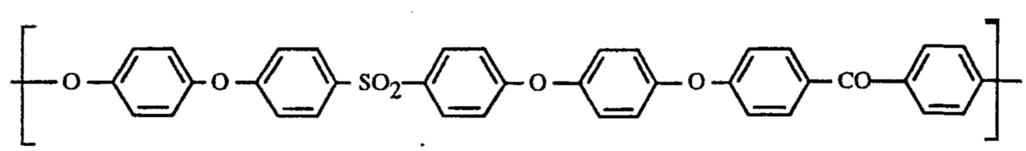

(I)

und 0-60 Mol% eines wiederkehrenden Strukturelements der Formel II
$\{OAr_1-O-Ar_2\}$ (II)
enthalten, worin $Ar_1$ eine Gruppe der Formeln IIIa oder IIIb darstellt

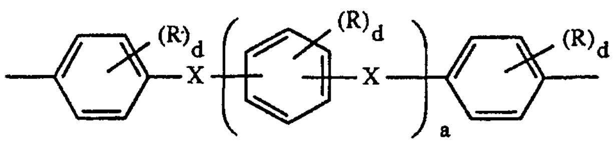 (IIIa),

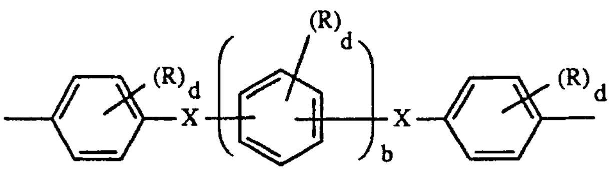 (IIIb),

und $Ar_2$ eine Gruppe der Formeln IVa-IVd bedeutet

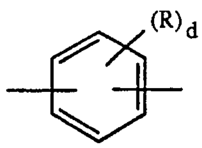 (IVa), 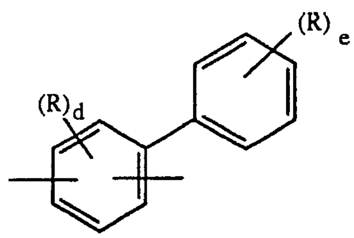 (IVb),

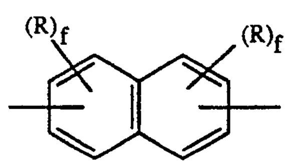 (IVc) oder 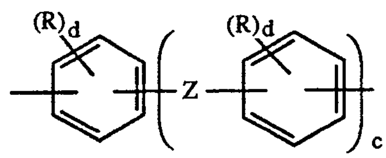 (IVd),

wobei X für -CO-, $-SO_2-$ oder -SO- und Z für eine direkte Bindung, $-CH_2-$, $-C(CH_3)_2-$,$-C(CF_3)_2-$, -CO-, $-SO_2-$, -SO-, -S- oder -O- stehen, R eine $C_1$-$C_4$-Alkylgruppe bedeutet, a die Zahlen 0, 1 oder 2, b die Zahlen 2 oder 3 und c die Zahlen 1, 2 oder 3 darstellen und d für eine ganze Zahl von 0 bis 4, e für eine ganze Zahl von 0 bis 5 und f für eine ganze Zahl von 0 bis 3 stehen, dadurch gekennzeichnet, dass man (a1) entweder ein Dihalogenderivat der Formel V

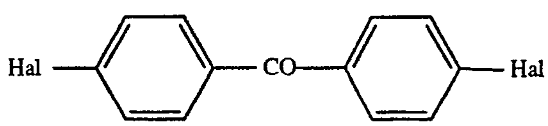 (V)

mit einem Diphenol der Formel VI

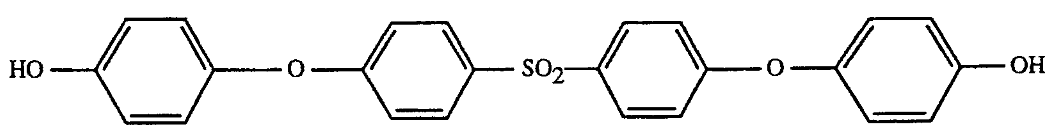

oder ein Dihalogenderivat der Formel VII

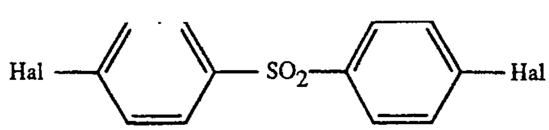 (VII)

mit einem Diphenol der Formel VIII

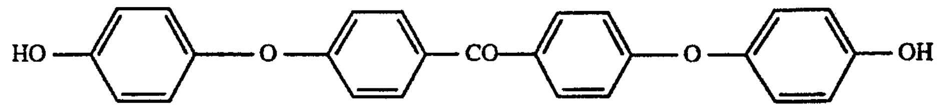 (VIII)

in Gegenwart alkalischer Katalysatoren in einem polaren aprotischen Lösungsmittel polykondensiert, gegebenenfalls

(a2) ein Dihalogenderivat der Formel IX

Hal-$Ar_1$-Hal (IX)

mit einem Diphenol der Formel X

HO-$Ar_2$-OH (X)

in Gegenwart alkalischer Katalysatoren in einem polaren aprotischen Lösungsmittel polykondensiert und anschliessend gegebenenfalls (b) die Reaktionsprodukte der Umsetzung (a1) mit den Rekktionsprodukten der Umsetzung (a2) miteinander in Gegenwart alkalischer Katalysatoren in einem polaren aprotischen Lösungsmittel weiter polykondensiert, wobei Hal in den Formeln V, VII und IX für Halogen, insbesondere Fluor oder Chlor steht, $Ar_1$ und $Ar_2$ die oben angegebene Bedeutung haben, und wobei die relativen Mengen des Reaktionsproduktes (a1) und des Reaktionsproduktes (a2) so gewählt werden, dass das resultierende Copolymer die in Anspruch 1 definierten Mengen der Strukturelemente der Formel I und II aufweist.

2. Verfahren nach Anspruch 1, worin die Polyetherketonsulfone 75-100 Mol% eines wiederkehrenden Strukturelements der Formel I und 0-25 Mol% eines wiederkehrenden Strukturelements der Formel II enthalten.

3. Verfahren nach Anspruch 1 oder 2, worin die Polyetherketonsulfone 90-100 Mol% eines wiederkehrenden Strukturelements der Formel I und 0-10 Mol% eines wiederkehrenden Strukturelements der Formel II enthalten.

4. Verfahren nach einem der Ansprüche 1 bis 3, worin X in den Formeln IIIa und IIIb -CO- oder -$SO_2$- bedeutet.

5. Verfahren nach einem der Ansprüche 1 bis 4, worin Z in der Formel IVd eine direkte Bindung, -$C(CH_3)_2$-, -CO-, -$SO_2$-, -S- oder -O- bedeutet.

6. Verfahren nach einem der Ansprüche 1 bis 5, worin R in den Formeln IIIa, IIIb und IVa-IVd Methyl bedeutet.

7. Verfahren nach einem der Ansprüche 1 bis 5, worin d, e und f in den Formeln IIIa, IIIb und IVa-IVd jeweils die Zahl 0 bedeuten.

8. Verfahren nach einem der Ansprüche 1 bis 7, worin die Polyetherketonsulfone eine reduzierte Viskosität von 0,1 bis 2,0 dl/g, vorzugsweise von 0,3 bis 1,5 dl/g, gemessen bei 25° C an einer 1%igen Lösung (1 g/100 ml) in N-Methylpyrrolidon aufweisen.

9. Verfahren nach einem der Ansprüche 1 bis 8, worin anstelle der Diphenole der Formeln VI oder VIII und X die entsprechenden Alkali- oder Erdalkaliphenolate eingesetzt werden.

10. Verwendung der Polyetherketonsulfone hergestellt nach einem der Ansprüche 1 bis 9 zur Herstellung von Formkörpern, Folien, Beschichtungen oder Klebverbindungen.

11. Verwendung der Polyetherketonsulfone hergestellt nach einem der Ansprüche 1 bis 9 zusammen mit Verstärkungsfasern zur Herstellung eines Faserverbundes.

12. Verwendung der Polyetherketonsulfone hergestellt nach einem der Ansprüche 1 bis 9 zum Modifizieren von Kunststoffen.